(19) Europäisches Patentamt
European Patent Office
Office européen des brevets

(11) **EP 2 651 721 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(51) Int Cl.:
***B60T 7/04*** *(2006.01)*

(21) Anmeldenummer: **11770090.6**

(22) Anmeldetag: **11.10.2011**

(86) Internationale Anmeldenummer:
**PCT/EP2011/067682**

(87) Internationale Veröffentlichungsnummer:
**WO 2012/079802 (21.06.2012 Gazette 2012/25)**

(54) **VERFAHREN ZUM EINSTELLEN DER VON EINER FESTSTELLBREMSE AUSGEÜBTEN KLEMMKRAFT**

METHOD FOR ADJUSTING THE CLAMPING FORCE APPLIED BY A PARKING BRAKE

PROCÉDÉ DE RÉGLAGE DE LA FORCE DE SERRAGE EXERCÉE PAR UN FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 DE 102010063374**

(43) Veröffentlichungstag der Anmeldung:
**23.10.2013 Patentblatt 2013/43**

(73) Patentinhaber: **Robert Bosch GmbH**
**70442 Stuttgart (DE)**

(72) Erfinder:
• **BIELTZ, Karsten**
**74395 Mudelsheim (DE)**
• **HAUBER, Simon**
**71691 Freiberg am Neckar (DE)**

(56) Entgegenhaltungen:
WO-A1-2008/017613       WO-A1-2009/053429
DE-A1-102004 059 688    DE-A1-102006 052 810
DE-A1-102007 049 717    DE-A1-102010 028 779
US-A1- 2004 026 989     US-A1- 2007 235 267

**Beschreibung**

Die Erfindung bezieht sich auf ein Verfahren zum Einstellen der von einer Feststellbremse ausgeübten Klemmkraft in einem Fahrzeug.

Stand der Technik

Feststell- bzw. Parkbremsen in Fahrzeugen dienen zum dauerhaften Festsetzen des Fahrzeugs während des Stillstands. Bekannt sind elektromechanische Feststellbremsen, die als Stellglied einen elektrischen Bremsmotor aufweisen, über den ein Bremskolben mit einem Bremsbelag gegen eine Bremsscheibe gedrückt wird. Eine derartige Feststellbremse wird beispielsweise in der DE 103 61 042 B3 beschrieben.

Aus dieser Druckschrift ist es darüber hinaus bekannt, Änderungen der Zustellkraft zu kompensieren, welche aufgrund von Verschleiß, thermischen Einflüssen oder einer Änderung des elektrischen Widerstandes entstehen.

Die DE 10 2010 028 779 A1 offenbart eine Feststellbremse für ein Fahrzeug mit einem elektrischen Bremsmotor. Zur Ermittlung des elektrischen Gesamtwiderstandes wird dem Bremsmotor über die Anschlüsse der Kabel aus einer vorgegebenen, bekannten Spannung eines Steuergeräts ein resultierender Strom aufgeprägt. Aus gemessenen Spannungs- und Stromwerten wird bei bekanntem Gesamtwiderstand die Temperatur des Bremsmotors rechnerisch ermittelt.

Offenbarung der Erfindung

Der Erfindung liegt die Aufgabe zugrunde, mit einfachen Maßnahmen die von einer elektromechanischen Feststellbremse bereitzustellende Klemmkraft mit hoher Genauigkeit einzustellen. Es sollen hierbei insbesondere mit einfachen Maßnahmen Änderungen von Motorparametern, die sich auf die bereitzustellende Klemmkraft auswirken, erfasst werden können.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf eine elektromechanische Park- bzw. Feststellbremse in Fahrzeugen, bei der mithilfe eines elektromechanischen Stellglieds bzw. Aktuators eine Klemmkraft zum Festsetzen des Fahrzeugs erzeugt wird. Bei dem elektromechanischen Stellglied handelt es sich vorzugsweise um einen elektrischen Bremsmotor. Gegebenenfalls wirkt mit der Feststellbremse auch eine hydraulische Bremsvorrichtung im Fahrzeug zusammen, beispielsweise dergestalt, dass die hydraulische Fahrzeugbremse auf den von dem Bremsmotor beaufschlagten Bremskolben drückt, so dass sich die Gesamtklemmkraft aus einem elektromechanischen Anteil und einem hydraulischen Anteil zusammensetzt. Grundsätzlich ist die Feststellbremse aber in der Lage, die Klemmkraft allein über die elektromechanische Bremsvorrichtung bereitzustellen.

Mithilfe des erfindungsgemäßen Verfahrens kann der Gesamtwiderstand in der elektromotorischen Bremsvorrichtung ermittelt werden. Die Kenntnis des genauen Widerstands ist für die Bestimmung der von der elektromotorischen Bremsvorrichtung bereitzustellenden Klemmkraft relevant. Der Widerstand kann sich durch Alterung und Temperatureinfluss ändern, außerdem sind Fertigungsstreuungen bei der Höhe des Widerstandes zu berücksichtigen.

Erfindungsgemäß wird der Gesamtwiderstand in der elektromotorischen Bremsvorrichtung unter Zugrundelegung einer induzierten Spannung im Stromkreis der Bremsvorrichtung ermittelt. Hierbei wird der Stromkreis unterbrochen, so dass kein Strom mehr fließt und aufgrund des sich noch drehenden Motors eine Spannung induziert wird, die gemessen bzw. bestimmt werden kann. Da der Stromkreis geöffnet ist, liegen über die induzierte Spannung hinaus keine weiteren Spannungen an. Somit ist es möglich, den Wert der Induktionsspannung zu ermitteln und bei der Berechnung des Gesamtwiderstandes zu berücksichtigen. Änderungen in den Widerständen, welche beispielsweise auf Temperatureinflüsse oder Alterung zurückzuführen sind, werden automatisch mit erfasst. Bei Kenntnis des Gesamtwiderstands kann die elektromotorisch einstellbare Klemmkraft bestimmt bzw. eingestellt werden. Beispielsweise können bei einer Änderung des Gesamtwiderstandes, welche zum Beispiel auf Temperatureinflüsse zurückzuführen sind, Maßnahmen zur Anpassung der Klemmkraft ergriffen werden. Falls sich herausstellt, dass die geforderte Soll-Klemmkraft aufgrund einer Änderung der Motorparameter nicht mehr allein über die elektromechanische Bremsvorrichtung erzeugt werden kann, kann über eine Zusatzbremsvorrichtung eine ergänzende Klemmkraft bereitgestellt werden. Bei der Zusatzbremsvorrichtung handelt es sich vorzugsweise um die hydraulische Fahrzeugbremse.

Darüber hinaus bzw. alternativ kommen auch weitere Maßnahmen in Betracht, die mit der Kenntnis des Gesamtwiderstands und darauf aufbauend der bereitzustellenden elektromotorischen Klemmkraft ergriffen werden können. Falls beispielsweise eine signifikante Verschlechterung von Motorparametern eintritt, zum Beispiel durch Alterung, kann gegebenenfalls auch ein Fehlersignal erzeugt werden, das dem Fahrer zur Anzeige gebracht oder in sonstiger Weise verarbeitet wird.

Bei der Ermittlung des Gesamtwiderstandes wird die Differenz der Spannung bei geschlossenem Stromkreis und der induzierten Spannung beim Öffnen des Stromkreises bestimmt und diese Differenz durch den Strom bei geschlossenem Stromkreis dividiert. Die Spannung bei geschlossenem Stromkreis setzt sich aus verschiedenen Komponenten zusammen, welche einen Spannungsanteil umfassen, der auf die Leitungswiderstände zurückzuführen ist, sowie einen Spannungsanteil des elektrischen Bremsmotors und darüber hinaus einen Spannungsanteil aus induzierter Spannung. Gemessen wird die Summe dieser Spannungsanteile bei geschlossenem Stromkreis sowie der hierbei fließende Strom. Von der Summe der einzelnen Stromanteile bei geschlossenem Stromkreis wird die beim Öffnen des Stromkreises induzierte Spannung, welche ebenfalls gemessen wird, subtrahiert. Diese Vorgehensweise hat den Vorteil, dass die einzelnen Spannungsanteile, welche im geschlossenen Stromkreis anliegen, nicht separat bestimmt werden müssen, sondern insgesamt in die Berechnung des Widerstandes einfließen.

Bei dem zu ermittelnden Widerstand handelt es sich um einen Gesamtwiderstand, welcher zum einen Leitungswiderstände im Stromkreis sowie zum anderen den Motorwiderstand umfasst.

Gemäß eines weiteren Aspektes der Erfindung erfolgt die Stromunterbrechung zur Ermittlung der induzierten Spannung während des Zustellens der Feststellbremse. Darüber hinaus ist es zweckmäßig, dass die Stromunterbrechung zur Ermittlung der induzierten Spannung während einer Leerlaufphase des elektrischen Bremsmotors erfolgt. In dieser Phase weist die Motordrehzahl ein verhältnismäßig hohes Niveau auf. Mit dem Öffnen des Stromkreises dreht sich aufgrund der Trägheit der Rotor weiter, wobei sich die Motordrehzahl im Vergleich zum Strom trägheitsbedingt nur sehr langsam ändert. Auch die Gegeninduktionsspannung, die in einem direkten Zusammenhang zur Motordrehzahl steht, ändert sich im Vergleich zum Strom nur langsam.

Zweckmäßigerweise erfolgt das Öffnen des Stromkreises im Rahmen einer kurzzeitigen Stromunterbrechung, bei der nach dem Öffnen der Stromkreis innerhalb kurzer Zeit wieder geschlossen und der Zustellvorgang fortgesetzt wird. Es genügt, den Stromkreis für lediglich Sekundenbruchteile zu unterbrechen, beispielsweise für maximal eine Zehntel Sekunde.

Die Messung des Stroms und der Spannung bei geschlossenem Stromkreis erfolgt vorteilhafterweise unmittelbar vor der Stromunterbrechung, während der die induzierte Spannung bestimmt wird. Damit ist gewährleistet, dass sich die gemessenen Größen bei geschlossenem und bei geöffnetem Stromkreis auf eine zumindest nahezu identische Motordrehzahl beziehen.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:

Fig. 1    einen Schnitt durch eine elektromechanische Feststellbremse für ein Fahrzeug, bei der die Klemmkraft über einen elektrischen Bremsmotor erzeugt wird,

Fig. 2    ein Schaubild mit dem zeitabhängigen Verlauf des Stroms, der Spannung, der Motordrehzahl, der Klemmkraft sowie des Stellwegs beim Zuspannvorgang der Feststellbremse,

Fig. 3    ein vereinfachtes Ersatzschaltbild für die Ansteuerung des elektrischen Bremsmotors bei geschlossenem Schalter,

Fig. 4    das Ersatzschaltbild für die Ansteuerung des elektrischen Bremsmotors bei geöffnetem Schalter.

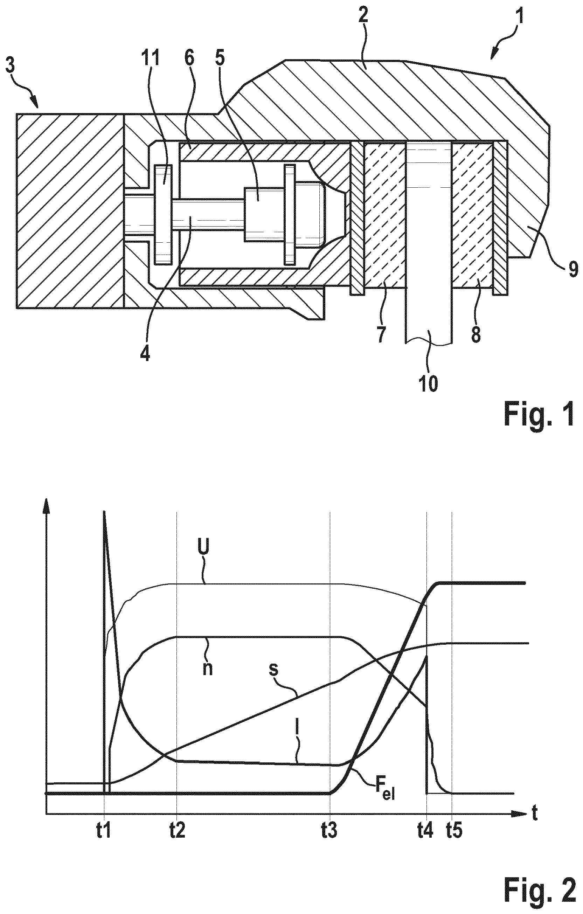

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

In Fig. 2 ist ein Schaubild mit dem Stromverlauf I, der Spannung U, dem Drehzahlverlauf n des elektrischen Bremsmotors sowie des Stellwegs s des Spindelbauteils 5 und der erzeugten elektromechanischen Klemmkraft $F_{el}$ zeitabhängig für einen Zuspannvorgang dargestellt. Zum Zeitpunkt t1 beginnt der Zuspannvorgang, indem eine elektrische Spannung aufgebracht und der Bremsmotor bei geschlossenem Stromkreis unter Strom gesetzt wird. Zum Zeitpunkt t2 haben die Spannung U und die Motordrehzahl n ihr Maximum erreicht. Die Phase zwischen t2 und t3 stellt die Leerlaufphase dar, in welcher der Strom I sich auf einem Minimumniveau bewegt. Daran schließt sich ab dem Zeitpunkt t3 die Kraftaufbauphase bis zum Zeitpunkt t4 mit ansteigender elektromechanischer Klemmkraft $F_{el}$ an, in der die Bremsbeläge an der Bremsscheibe anliegen und mit zunehmender Klemmkraft $F_{el}$ gegen die Bremsscheibe gedrückt werden. Zum Zeitpunkt t4 erfolgt das Abschalten des elektrischen Bremsmotors durch Öffnen des Stromkreises, der Abschaltvorgang erstreckt sich bis zum Zeitpunkt t5, in welchem die Drehzahl n des Bremsmotors bis auf Null abgefallen ist.

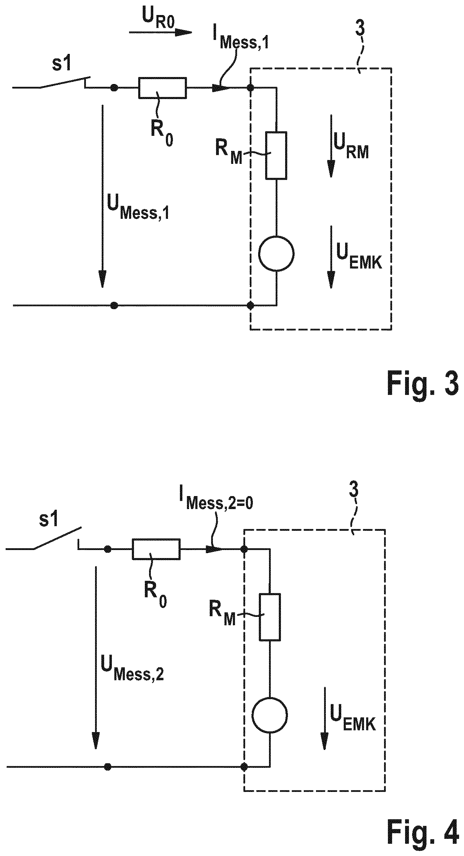

In den Fig. 3 und 4 ist jeweils ein Ersatzschaltbild für die Ansteuerung des elektrischen Bremsmotors dargestellt, wobei in Fig. 3 ein Schalter s1 in geschlossener Stellung steht, so dass ein geschlossener Stromkreis gebildet ist, und in Fig. 4 der Schalter s1 geöffnet ist, so dass der Stromkreis unterbrochen ist.

Der Stromkreis setzt sich aus Leitungswiderständen $R_0$ zusammen sowie einem Motorwiderstand $R_M$ des elektrischen Bremsmotors 3. Der Gesamtwiderstand $R_{ges}$ setzt sich additiv aus den Leitungswiderständen $R_0$ und dem Motorwiderstand $R_M$ zusammen:

$$R_{ges} = R_0 + R_M \ .$$

Bei geschlossenem Schalter s1 kann die gesamte anliegende Spannung über dem Bremsmotor 3 einschließlich den Leitungswiderständen $U_{Mess,1}$ ermittelt werden, die sich aus den Einzelspannungen $U_{R0}$ über den Leitungswiderständen $U_{RM}$ über dem Bremsmotor sowie $U_{EMK}$ als Gegeninduktionsspannung zusammensetzt:

$$U_{Mess,1} = U_{R0} + U_{RM} + U_{EMK} \ .$$

Die Spannung $U_{Mess,1}$ kann gemessen werden, ebenso der bei geschlossenem Stromkreis fließende Strom $I_{Mess,1}$.

Bei geöffnetem Schalter s1 (Fig. 4) fließt dagegen kein Strom im Stromkreis, die Messspannung $I_{Mess,2}$ ist gleich null. Da sich die Motordrehzahl mit dem Öffnen des Schalters s1 aufgrund der Trägheit des Rotors im Vergleich zum Strom nur langsam ändert, wird auch bei geöffnetem Schalter s1 eine Gegeninduktionsspannung $U_{EMK}$ erzeugt, die als Messspannung $U_{Mess,2}$ ermittelt werden kann. Mit der gemessenen Spannung $U_{Mess,1}$ sowie dem gemessenen Strom $I_{Mess,1}$ bei geschlossenem Stromkreis kann hieraus der Gesamtwiderstand $R_{ges}$ gemäß

$$R_{ges} = R_0 + R_M = (U_{Mess,1} - U_{Mess,2})/I_{Mess,1}$$

berechnet werden. Damit steht der aktuelle Gesamtwiderstand im elektrischen Bremsmotor fest, wobei im Wert des Gesamtwiderstandes $R_{ges}$ auch Änderungen berücksichtigt sind, die durch Alterung, Temperatureinfluss oder sonstige Einflüsse entstehen. Der Gesamtwiderstand $R_{ges}$ kann beispielsweise in einem mathematischen Modell, zum Beispiel der elektromotorischen Differenzialgleichung zur Bestimmung der elektromechanischen Klemmkraft oder einer sonstigen Größe verwendet werden.

**Patentansprüche**

1.  Verfahren zum Einstellen der von einer Feststellbremse (1) ausgeübten Klemmkraft (F), die zumindest teilweise von einer elektromotorischen Bremsvorrichtung aufgebracht wird, welche einen elektrischen Bremsmotor (3) umfasst, **dadurch gekennzeichnet, dass** ein Gesamtwiderstand ($R_{ges}$) in der elektromotorischen Bremsvorrichtung unter Berücksichtigung einer induzierten Spannung ($U_{EMK}$) beim Öffnen des Stromkreises ermittelt wird, und dass unter Zugrundelegung des Gesamtwiderstands ($R_{ges}$) die Klemmkraft (F) bestimmt bzw. eingestellt wird.

2.  Verfahren nach Anspruch 1, **dadurch gekennzeichnet, dass** der Gesamtwiderstand ($R_{ges}$) aus dem Verhältnis der Differenz der Spannung ($U_{mess,1}$) bei geschlossenem Stromkreis in der elektromotorischen Bremsvorrichtung und der induzierten Spannung ($U_{EMK}$) beim Öffnen des Stromkreises zum Strom ($I_{Mess,1}$) bei geschlossenem Stromkreis bestimmt wird:

$$R_{ges} = (U_{Mess,1} - U_{EMK})/I_{Mess,1}$$

**3.** Verfahren nach Anspruch 1 oder 2, **dadurch gekennzeichnet, dass** der Gesamtwiderstand ($R_{ges}$) Leitungswiderstände ($R_0$) und den Motorwiderstand ($R_M$) umfasst:

$$R_{ges} = R_0 + R_M$$

**4.** Verfahren nach einem der Ansprüche 1 bis 3, **dadurch gekennzeichnet, dass** die Stromunterbrechung zur Ermittlung der induzierten Spannung ($U_{EMK}$) während des Zustellens der Feststellbremse (1) erfolgt.

**5.** Verfahren nach einem der Ansprüche 1 bis 4, **dadurch gekennzeichnet, dass** die Stromunterbrechung zur Ermittlung der induzierten Spannung ($U_{EMK}$) während einer Leerlaufphase des elektrischen Bremsmotors (3) erfolgt.

**6.** Verfahren nach einem der Ansprüche 1 bis 5, **dadurch gekennzeichnet, dass** die Messung des Stroms ($I_{Mess,1}$) und der Spannung bei geschlossenem Stromkreis unmittelbar vor der Stromunterbrechung zur Ermittlung der induzierten Spannung ($U_{EMK}$) erfolgt.

**7.** Verfahren nach einem der Ansprüche 1 bis 6, **dadurch gekennzeichnet, dass** die Klemmkraft zumindest teilweise von einer Zusatzbremsvorrichtung aufgebracht wird.

**8.** Verfahren nach Anspruch 7, **dadurch gekennzeichnet, dass** als Zusatzbremsvorrichtung eine hydraulische Fahrzeugbremse verwendet wird.

**9.** Regel- bzw. Steuergerät das das Verfahren nach einem der Ansprüche 1 bis 8 durchführt.

**10.** Feststellbremse in einem Fahrzeug mit einem Regel- bzw. Steuergerät nach Anspruch 9.


**Claims**

**1.** Method for adjusting the clamping force (F) which is applied by a parking brake (1) and is exerted at least partially by an electromotive brake device which comprises an electric brake motor (3), **characterized in that** an overall resistance ($R_{ges}$) in the electromotive brake device is determined by taking into account an induced voltage ($U_{EMK}$) when the circuit opens, and **in that** the clamping force (F) is determined or adjusted on the basis of the overall resistance ($R_{ges}$).

**2.** Method according to Claim 1, **characterized in that** the overall resistance ($R_{ges}$) is determined from the ratio between the difference in the voltage ($U_{mess,1}$) when the circuit is closed in the electromotive brake device and the induced voltage ($U_{EMK}$) when the circuit opens with respect to the current ($I_{mess,1}$) when the circuit is closed:

$$R_{ges} = (U_{Mess,1} - U_{EMK})/I_{Mess,1}$$

**3.** Method according to Claim 1 or 2, **characterized in that** the overall resistance ($R_{ges}$) comprises line resistances ($R_0$) and the motor resistance ($R_M$):

$$R_{ges} = R_0 + R_M$$

**4.** Method according to one of Claims 1 to 3, **characterized in that** the interruption in the current for the determination of the induced voltage ($U_{EMK}$) takes place during the application of the parking brake (1).

**5.** Method according to one of Claims 1 to 4, **characterized in that** the interruption in the current for the determination of the induced voltage ($U_{EMK}$) takes place during an idling phase of the electric brake motor (3).

**6.** Method according to one of Claims 1 to 5, **characterized in that** the measurement of the current ($I_{mess,1}$) and the voltage when the circuit is closed takes place directly before the interruption in the current for the determination of the induced voltage ($U_{EMK}$).

**7.** Method according to one of Claims 1 to 6, **characterized in that** the clamping force is applied at least partially by an additional brake device.

**8.** Method according to Claim 7, **characterized in that** a hydraulic vehicle brake is used as an additional brake device.

**9.** Closed-loop or open-loop control device which carries out the method according to one of Claims 1 to 8.

**10.** Parking brake in a vehicle having a closed-loop or open-loop control device according to Claim 9.

**Revendications**

**1.** Procédé de réglage de la force de serrage (F) exercée par un frein d'immobilisation (1), laquelle est appliquée au moins partiellement par un dispositif de freinage électromotorisé, lequel comprend un moteur de frein électrique (3), **caractérisé en ce qu'**une résistance totale ($R_{ges}$) dans le dispositif de freinage électromotorisé est déterminée en tenant compte d'une tension induite ($U_{EMK}$) lors de l'ouverture du circuit électrique, et **en ce que** la force de serrage (F) est définie ou réglée en s'appuyant sur la résistance totale ($R_{ges}$).

**2.** Procédé selon la revendication 1, **caractérisé en ce que** la résistance totale ($R_{ges}$) est définie à partir de la différence entre la tension ($U_{mess,1}$) lorsque le circuit électrique est fermé dans le dispositif de freinage électromotorisé et la tension induite ($U_{EMK}$) lors de l'ouverture du circuit électrique par rapport au courant ($I_{Mess,1}$) lorsque le circuit électrique est fermé :

$$R_{ges} = (U_{Mess,1} - U_{EMK}) / I_{Mess,1}$$

**3.** Procédé selon la revendication 1 ou 2, **caractérisé en ce que** la résistance totale ($R_{ges}$) comprend les résistances de ligne ($R_0$) et la résistance de moteur ($R_M$) :

$$R_{ges} = R_0 + R_M.$$

**4.** Procédé selon l'une des revendications 1 à 3, **caractérisé en ce que** l'interruption du courant en vue de déterminer la tension induite ($U_{EMK}$) est effectuée pendant l'application du frein d'immobilisation (1).

**5.** Procédé selon l'une des revendications 1 à 4, **caractérisé en ce que** l'interruption du courant en vue de déterminer la tension induite ($U_{EMK}$) est effectuée pendant une phase de fonctionnement à vide du moteur de frein électrique (3).

**6.** Procédé selon l'une des revendications 1 à 5, **caractérisé en ce que** la mesure du courant ($I_{Mess,1}$) et de la tension avec le circuit électrique fermé est effectuée directement avant l'interruption du courant en vue de déterminer la tension induite ($U_{EMK}$).

**7.** Procédé selon l'une des revendications 1 à 6, **caractérisé en ce que** la force de freinage est appliquée au moins partiellement par un dispositif de freinage supplémentaire.

**8.** Procédé selon la revendication 7, **caractérisé en ce que** le dispositif de freinage supplémentaire utilisé est un frein de véhicule hydraulique.

**9.** Régulateur ou contrôleur qui met en oeuvre le procédé selon l'une des revendications 1 à 8.

**10.** Frein d'immobilisation dans un véhicule équipé d'un régulateur ou contrôleur selon la revendication 9.

Fig. 1

Fig. 2

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361042 B3
- DE 102010028779 A1